Europäisches Patentamt

European Patent Office

Office européen des brevets

(11) Veröffentlichungsnummer: **0 042 078**
**B1**

# (12) EUROPÄISCHE PATENTSCHRIFT

(45) Veröffentlichungstag der Patentschrift:
**05.12.84**

(21) Anmeldenummer: **81103967.6**

(22) Anmeldetag: **23.05.81**

(51) Int. Cl.³: **F 16 C 33/58**, F 16 C 19/00

(54) Grosswälzlager in Leichtbauweise.

(30) Priorität: **13.06.80 DE 3022227**

(43) Veröffentlichungstag der Anmeldung:
**23.12.81 Patentblatt 81/51**

(45) Bekanntmachung des Hinweises auf die Patenterteilung:
**05.12.84 Patentblatt 84/49**

(84) Benannte Vertragsstaaten:
**DE FR GB IT SE**

(56) Entgegenhaltungen:
**DE - C - 607 264**
**DE - C - 1 174 970**
**DE - U - 1 945 404**
**DE - U - 7 019 131**
**FR - A - 384 384**
**US - A - 3 404 925**
**US - A - 3 645 593**

(73) Patentinhaber: **Hoesch Aktiengesellschaft,**
**Eberhardstrasse 12, D-4600 Dortmund 1 (DE)**

(72) Erfinder: **Röling, Horst, Ing. grad., Elchstrasse 10,**
**D-4700 Hamm 1 (DE)**

## Beschreibung

Die Erfindung betrifft ein Grosswälzlager in Leichtbauweise nach dem Oberbegriff des Anspruchs 1.

Bei Grosswälzlagern spielt das Gewicht in vielen Fällen eine wesentliche Rolle. Durch den grossen Durchmesser und den nötigen Querschnitt zur Aufnahme der Wälzkörper und zur Befestigung wird in massiver Stahlbauweise stets ein beträchtliches Gewicht benötigt. Da in vielen Fällen jedoch Grosswälzlager aufgrund ihrer grossen Mittenfreiheit eingesetzt werden sollen, hat es die verschiedensten Überlegungen gegeben, diese Lager für Einsatzfälle, bei denen besonders mit geringem Gewicht gebaut werden soll, leicht auszuführen.

Nach dem DE-U-1 945 404 wurde zur Gewichtsersparnis das Grosswälzlager aus Blechen hergestellt. Das DE-U-1 791 875 zeigt eine weitere Entwicklung eines Grosswälzlagers in Leichtbauweise, bei dem von gerundetem und zusammengeschweisstem Profilmaterial ausgegangen wurde.

Derartige Grosswälzlager in Leichtbauweise besitzen jedoch den Nachteil, dass sie nur eine äusserst geringe Eigensteifigkeit gegen Verwindung besitzen, so dass es dadurch zu Drehwiderstandsspitzen kommen kann.

Nach der DE-A-1 174 970 ist es weiterhin bekannt, ein Grosswälzlager in Leichtbauweise durch Lagerringe aus Kunststoff mit geringem Gewicht herzustellen. Dadurch ergibt sich jedoch eine geringe Laufbahnhärte, so dass derartige Lager nur geringe Kräfte übertragen können bzw. bei höheren Kräften nur eine geringe Lebensdauer haben. Diesem Nachteil soll zwar entgegengewirkt werden, indem an den Laufbahnflächen Metall eingelegt wird. Das bedeutet jedoch eine sehr aufwendige und komplizierte Fertigung und damit sehr hohe Herstellungskosten.

Nach DE-U-7 019 131 und US-A-3 404 925 sind Wälzlager bekannt, deren Lagerringe als Hohlprofile ausgebildet sind. Diese Wälzlager werden jedoch üblicherweise mit ihrem Aussendurchmesser in einer Gehäusebohrung und mit ihrem Innendurchmesser auf einen Wellensitz eingebaut. Dadurch stützen Gehäusebohrung und Wellensitz die hohlprofilartigen Lagerringe ab, so dass diese nur geringfügig durch innere Kräfte aus den Lagerbelastungen belastet werden. Derartige Lagerbauformen eignen sich nicht zum Einsatz als Grosswälzlager.

Der Erfindung liegt die Aufgabe zugrunde, ein Grosswälzlager in Leichtbauweise zu schaffen, das bei guter Eigensteifigkeit eine ausreichende Laufbahnfestigkeit besitzt und in einfacher Weise herzustellen ist.

Diese Aufgabe wird erfindungsgemäss bei einem Grosswälzlager der eingangs näher bezeichneten Art durch die Merkmale des Kennzeichens des Anspruchs 1 gelöst.

In weiterer Ausgestaltung des Erfindungsgedankens erhalten vorteilhaft die Lagerringe nach dem Runden und Fügen in den Abmessungen und/oder dem Querschnitt vorzugsweise durch spanlose Umformung ihre Endform, wobei eine Profilierung zur Anpassung der Laufbahnbereiche an die Wälzkörperform erfolgen kann.

Durch Anschluss an einen Wärme- oder Kühlkreislauf kann vorteilhaft das Hohlprofil zum Wärmen oder Kühlen des Lagers eingesetzt werden.

Die mit der Erfindung erzielten Vorteile bestehen insbesondere darin, dass das erfindungsgemässe Grosswälzlager in Leichtbauweise eine ausreichende Laufbahnfestigkeit bei guter Eigensteifigkeit besitzt. Die erzielte Eigensteifigkeit der Lagerringe ermöglicht, dass die Lagerringe ohne vollflächige radiale Abstützung nur punktweise mit der oberen und unteren Anschlusskonstruktion verbunden werden können, ohne dass sich die Lagerringe zwischen den Verbindungspunkten übermässig verformen und verwinden, und ohne dass durch Verformung der Lagerringe eine Schwergängigkeit der Drehbewegung auftritt.

Die Fertigung ist aufgrund der einfachen Profile sehr einfach, und es fällt bei der Produktion wenig Abfallmaterial an, was u. a. zu einem geringen Materialpreis des Lagers führt. Ausserdem ermöglicht diese Bauform beim Einsatz von entsprechendem Material eine gute Korrosionsfestigung in aggressiver Umgebung.

Ausführungsbeispiele der Erfindung werden in der Zeichnung schematisch dargestellt und im folgenden näher beschrieben.

Es zeigen:

Fig. 1 einen Teilschnitt durch eine Lagerhälfte mit Kreuzrollenwälzkörpern,

Fig. 2 einen Teilschnitt durch eine Lagerhälfte.

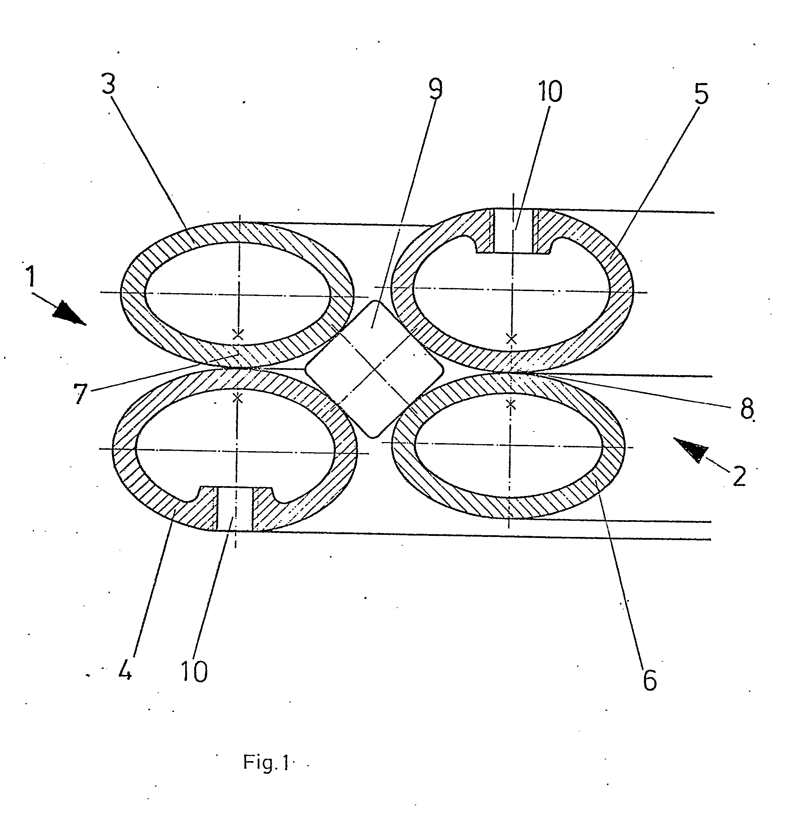

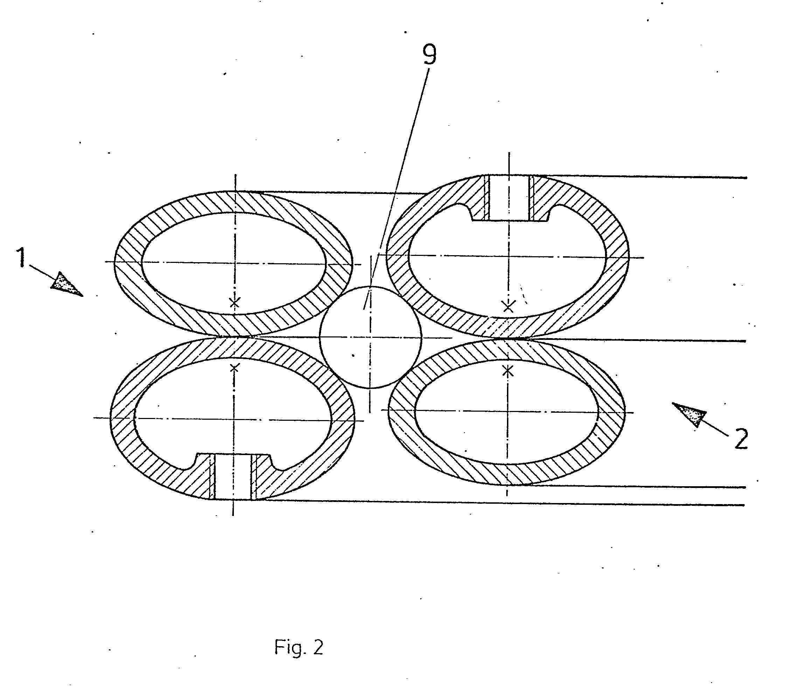

Bei der Ausbildung nach Fig. 1 ist jeder Lagerring 1, 2 aus zwei Hohlprofilen zusammengesetzt. Der Aussenring 1 ist zusammengesetzt aus einem oberen Hohlprofil 3 und einem unteren Hohlprofil 4. Der Innenring 2 besteht aus einem oberen Hohlprofil 5 und einem unteren Hohlprofil 6. Die zusammengehörigen Hohlprofile 3, 4 bzw. 5, 6 werden mit einer Verbindung 7 zum Aussenring 1 bzw. mit einer Verbindung 8 zum Innenring 2 verbunden. Die Verbindung kann verschieden erfolgen, im beschriebenen Ausführungsbeispiel durch eine Verschraubung. Es sind jedoch ohne weiteres eine Verschweissung, Verklebung oder Vernietung denkbar. Zwischen dem Aussenring 1 und dem Innenring 2 sind Wälzkörper 9 angeordnet. In Fig. 1 sind es kreuzweise versetzte Rollen, in Fig. 2 Kugeln. Zur Verbindung mit anderen Bauteilen oder z. B. Kühlkreisläufen sind Befestigungsmöglichkeiten 10 vorgesehen, z. B. als Durchgangs- oder Gewindelöcher.

Es ist auch möglich, die Geschlossenheit der Hohlprofile in besonderen Fällen dadurch zu erreichen, dass das Hohlprofil eine Trennstelle aufweist, die durch Verbindungsmittel zusammengehalten wird.

## Patentansprüche

1. Grosswälzlager in Leichtbauweise mit als Hohlprofil ausgebildeten, gerundeten und an den Enden zusammengefügten Lagerringen, dadurch gekennzeichnet, dass die Lagerringe (1, 2) jeweils aus zwei zusammengesetzten Hohlprofilen (3, 4 bzw. 5, 6) mit rundem, geschlossenem Querschnitt gebildet sind.

2. Grosswälzlager nach Anspruch 1, dadurch gekennzeichnet, dass die Lagerringe nach dem Runden und Fügen in den Abmessungen und/oder dem Querschnitt durch spanlose Umformung ihre Endform erhalten.

3. Grosswälzlager nach den Ansprüchen 1 und 2, dadurch gekennzeichnet, dass die Hohlprofile mit einem Wärme- oder Kühlkreislauf verbunden sind.

## Claims

1. Large roller bearing of light construction with bearing rings formed as hollow profile members which have been rounded and are located at the ends, characterized in that the bearing rings (1, 2) are each formed of two combined hollow profile members (3, 4 and 3, 6) with a rounded enclosed cross-section.

2. Large roller bearing according to claim 1, characterized in that the bearing rings receive their final form after being rounded off and adjusted in dimensions and/or cross-section by strainless deformation.

3. Large roller bearing according to claims 1 and 2, characterized in that the hollow profile members are combined with a heating or cooling circuit.

## Revendications

1. Couronne d'orientation de construction légère, avec des bagues d'appui réalisées sous forme de profilés creux arrondis et assemblés aux extrémités, caractérisée en ce que chaque bague d'appui (1, 2) est formée de deux profilés creux (3, 4; 5, 6) assemblés, ayant une section transversale arrondie, fermée.

2. Couronne d'orientation selon la revendication 1, caractérisée en ce que la forme des bagues d'appui, en dimension et/ou en section transversale, dans les arrondis et les emboîtures, est obtenue par déformation sans enlèvement de matière.

3. Couronne d'orientation selon les revendications 1 et 2, caractérisée en ce que les profilés creux sont reliés à un circuit de chauffage ou de refroidissement.

Fig.1

Fig. 2